# EUROPEAN PATENT SPECIFICATION

(11) **EP 1 971 697 B1**
(45) Date of publication and mention of the grant of the patent: **25.07.2012**
(21) Application number: 07701359.7
(22) Date of filing: 10.01.2007
(51) Int. Cl.: C22B 3/20, C22B 3/44, C22B 3/06, C22B 23/00

(54) **HEMATITE PRECIPITATION**
HÄMATIT-AUSSCHEIDUNG
PRECIPITATION D'HEMATITE

(30) Priority: 10.01.2006 AU 2006900102
(43) Date of publication of application: 24.09.2008
(73) Proprietor: Murrin Murrin Operations Pty Ltd, Perth, WA 6000 (AU)
(72) Inventor: RODRIGUEZ, Michael, Kingsley, Western Australia 60269 (AU); WEDDERBURN, Bruce, James, Glen Waverley, Victoria 3150 (AU)
(74) Representative: D'Arcy, Julia
(86) International application number: PCT/AU2007/000014
(87) International publication number: WO 2007/079532

(56) References cited:
- WO-A-2006/000098
- WO-A1-02/46481
- WO-A1-96/29439
- WO-A1-2005/093107
- WO-A1-2006/084335
- US-A- 4 548 794
- US-B1- 6 699 302

## Description

### Field of the Invention

The present invention relates to hematite precipitation. In particular, the present invention relates to a hydrometallurgical method for precipitating iron in the form of hematite from solutions containing nickel and cobalt, under atmospheric conditions. More particularly, the method of the present invention is intended to allow the precipitation of iron as hematite from solutions recovered from the processing of either nickel laterites and/or nickel sulphides.

### Background Art

In hydrometallurgical nickel processing methods, iron is typically precipitated as a ferric oxyhydroxide (commonly a goethite) and as a hematite product from the high pressure acid leaching process for nickel laterites. In some situations iron is also rejected as a jarosite product.

Unfortunately the rejection of iron as a ferric oxyhydroxide also results in significant co-precipitation of the valuable nickel and cobalt products. This either results in metallurgical losses or necessitates the reprocessing of the iron residue in order to recover the valuable nickel and cobalt.

The rejection of iron as a hematite product in the high pressure acid leaching processes used for nickel laterites necessitates the use of temperatures in the order of 250°C and pressures in the order of 45 Bar. This process by its very nature involves the use of capital intensive equipment. This equipment is also expensive to maintain and has associated high operating costs.

The jarosite process, whilst having lower losses of nickel and cobalt due to cleaner separation coefficients, can be an expensive process. The jarosite process typically requires the use of a suitable cation (such as Na⁺, K⁺ or NH₄⁺) together with elevated temperature and/or pressure.

In addition to the losses of nickel and cobalt associated with the ferric oxyhydroxide and ferric hydroxide formation, the major problems with this process are poor filtration rates, thickener settling characteristics and thickener underflow densities which are achievable. The ferric hydroxide in particular, and to a lesser extent the ferric oxyhydroxide, tends to have an open structure, which incorporates large amounts of base metals. Also, the solids have a low density. The low thickener underflow densities impact on both downstream processing equipment plus the volume of tailings which need to be disposed of.

Hematite is one of the most acceptable iron products for intermediate storage or disposal. This is due to its high thermodynamic stability, its high density (4.9 to 5.3 g/cm³), its high iron content (60% - 70%) and its low adsorption of water and base metals.

Methods for the management of iron in hydrometallurgical systems have been discussed in the literature, see for example Queneau and Weir (1986), "Control of iron during hydrometallurgical processing of nickeliferous laterite ores", in Iron Control in Hydrometallurgy, Dutrizac, J. E. and Monhemius, A. J. Eds., Ellis Horwood Limited, Chichester, UK, pp. 76-105, and Whittington and Muir (2000), "Pressure Acid Leaching of Nickel Laterites: A Review", Min. Pro. Ext. Met. Rev., Vol 21, pp527 - 600, at 558 - 565, and US 45 48 794.

The method of the present invention has as one object thereof to overcome substantially the problems of the prior art, or to at least provide a useful alternative thereto.

The preceding discussion of the background art is intended to facilitate an understanding of the present invention only. It should be appreciated that the discussion is not an acknowledgement or admission that any of the material referred to was part of the common general knowledge in Australia as at the priority date of the application.

Throughout the specification, unless the context requires otherwise, the word "comprise" or variations such as "comprises" or "comprising", will be understood to imply the inclusion of a stated integer or group of integers but not to the exclusion of any other integer or group of integers.

### Disclosure of the invention

In accordance with the present invention there is provided a hydrometallurgical method for precipitating iron in the form of hematite from leach solutions containing nickel, cobalt and iron, the method comprising the steps of:
(i) pre-neutralising the leach solution by the addition of a neutralising agent;
(ii) oxidising ferrous sulphate to ferric sulphate by sparging air or oxygen into the solution resulting from step (i) at an elevated temperature;
(iii) adjusting the free acid and pH of the solution resulting from step (ii) to levels suitable for hematite precipitation;
(iv) adding hematite seed to the solution resulting from step (iii) and maintaining the solution in these conditions for a residence time such that substantially complete conversion of ferric sulphate to hematite precipitate is achieved;
(v) filtering or thickening the solution from step (iv) to remove the hematite precipitate;
(vi) recycling a portion of the hematite of step (v) to step (iv) as the hematite seed; and
(vii) recovering nickel and cobalt from the filtrate solution.

Preferably, the oxidation of ferrous sulphate to ferric sulphate in step (ii) occurs at a temperature within the range of about 60°C to 150°C.

Sill preferably, the oxidation of ferrous sulphate to ferric sulphate in step (ii) occurs at a temperature within the range of about 60°C to 100°C.

The free acid concentration is preferably lower than about 10g/L.

The pH of the solution resulting from step (ii) is preferably maintained below about 2.5 to avoid precipitation of ferric oxyhydroxide.

Still further preferably, the solution temperature of step (iv) is maintained between about 60°C and 150°C during hematite precipitation.

Yet still further preferably, the solution temperature of step (iv) is maintained between about 60°C and 100°C during hematite precipitation.

Seed concentration preferably ranges between about 5g/L and 100g/L.

Preferably, air or oxygen is sparged into the solution of step (iv) during hematite precipitation.

The neutralising agent preferably comprises any one or more of calcrete, limestone or lime.

### Brief Description of the Drawings

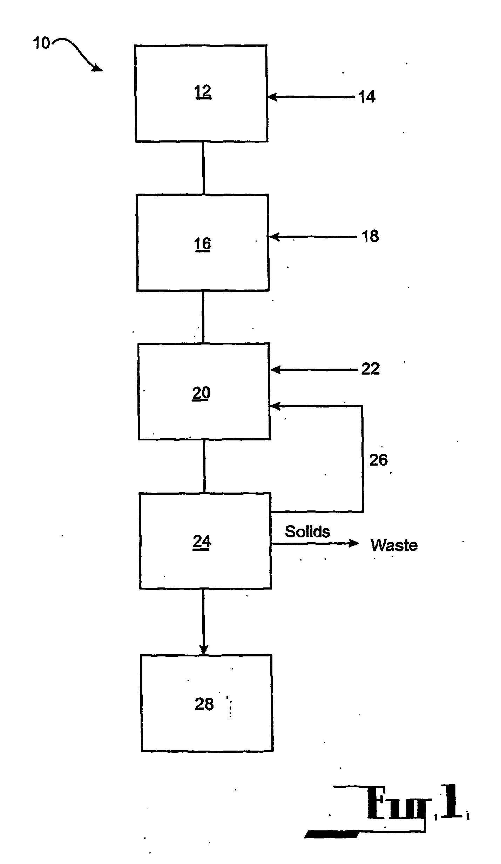

The present invention will now be described, by way of example only, with reference to one embodiment thereof and the accompanying drawing, in which:-
Figure 1 is a diagrammatic representation of a flow sheet depicting a hydrometallurgical method for the precipitation of iron in the form of hematite from a leach solution containing nickel and cobalt in accordance with the present invention.

### Best Mode(s) for Carrying Out the Invention

In Figure 1 there is shown a hydrometallurgical method 10 for precipitating iron in the form of hematite from a leach solution containing nickel and cobalt. In this example the leach solution is the pregnant leach solution containing nickel, cobalt and iron resulting from the leaching of a nickel laterite or fraction thereof under atmospheric conditions.

As sulphuric acid is released when ferric sulphate is converted to hematite the free acid in the leach solution needs to be neutralised prior to hematite precipitation. The leach solution is subjected to a pre-neutralisation step 12 in which a neutralising agent 14, for example calcrete, limestone and/or lime, is added to lower the free acid concentration in solution to below about 10g/L whilst keeping the pH below about 2.5.

The solution resulting from pre-reduction is then heated to between about 60 and 150°C, for example between about 60 and 100°C, before undergoing an oxidation step 16 through exposure to an oxidising agent 18, for example air or oxygen. The majority of ferrous sulphate present is oxidised to ferric sulphate.

Whilst maintaining the solution temperature the solution proceeds to a precipitation stage 20 where hematite seed 22 is added in a concentration range of between about 5 and 100g/L. The quantity of seed added will not alter precipitation kinetics but the amount added can affect the final product composition. The addition of the hematite seed 22 promotes the formation of hematite over other forms of iron hydroxides. The amount of seed added is important in as much as too much seed is a waste from an installed capital and operating cost perspective. If too little seed is added the likelihood of iron precipitating as something other than hematite increases.

A residence time of between about 0.5 and 200 hours, for example between about 0.5 and 20 hours, is employed to effect complete conversion of ferric sulphate to hematite, and this residence time will vary depending on the operating conditions adopted. The product solution is then filtered or thickened 24 to remove the hematite from solution. A recycle stream 26 is then employed to return a portion of the hematite residue back to the precipitation circuit 20 as the hematite seed. The filtrate or thickener overflow is then advanced to a nickel and cobalt recovery stage 26, in which the nickel and cobalt can be recovered using various known hydrometallurgical techniques including precipitation, solvent extraction or ion exchange.

The free acid is maintained in the range of about 0 to 10 g/L during the hematite precipitation stage 20. This can be achieved by adding a neutralising agent comprising calcrete, lime or limestone. Other neutralising agents including ammonia and caustic will also be suitable.

It is envisaged that it may also be beneficial to also sparge oxygen through the solution during the precipitation stage 20, thereby ensuring that ferrous iron is fully oxidised to ferric and enhancing the precipitation of hematite.

It is further envisaged that this method can be applied to leach solutions resulting from the leaching of nickel sulphide concentrates and nickel laterite ores.

As can be seen from the above description, the method of the present invention facilitates the precipitation of iron in the form of hematite from nickel containing hydrometallurgical process solutions ranging from atmospheric to medium pressure conditions, thereby constituting a very useful alternative to the methods of the prior art.

## Claims

1. A hydrometallurigal method for precipitating iron in the form of hematite from leach solutions containing nickel, cobalt and iron, **characterised by** the steps of:
i) pre-neutralising the leach solution by the addition of a neutralising agent;
ii) oxidising ferrous sulphate to ferric sulphate by sparging air or oxygen into the solution resulting from step (i) at an elevated temperature;
iii) adjusting the free acid and pH of the solution resulting from step (ii) to levels suitable for hematite precipitation;
iv) adding hematite seed to the solution resulting from step (iii) and maintaining the solution in these conditions for a residence time such that substantially complete conversion of ferric sulphate to hematite precipitate is achieved;
v) filtering or thickening the solution from step (iv) to remove the hematite precipitate;
vi) recycling a portion of the hematite of step (v) to step (iv) as the hematite seed; and
vii) recovering nickel and cobalt from the filtrate solution.

2. A method according to claim 1, wherein the oxidation of ferrous sulphate to ferric sulphate in step (ii) occurs at a temperature within the range of about 60°C. to 150°C.

3. A method according to claims 1 or 2, wherein the free acid concentration is below 10g/L.

4. A method according to any one of the claims 1 to 3, wherein the pH of the solution resulting from step (ii) is maintained below about 2.5.

5. A method according to any one of the preceding claims, wherein the solution of step (iv) is maintained between about 60°C and 150°C.

6. A method according to any one of the preceding claims, wherein the seed concentration is preferably within the range of about 5g/L and 100g/L.

7. A method according to any one of the preceding claims, wherein oxygen is sparged into the solution of step (iv) during hematite precipitation.

8. A method according to any one of the preceding claims, wherein the neutralising agent comprises any one or more of calcrete, limestone or lime.

## Patentansprüche

1. Ein hydrometallurgisches Verfahren zum Ausscheiden von Eisen in der Form von Hämatit aus Laugenlösungen, die Nickel, Cobalt und Eisen enthalten, **gekennzeichnet durch** die folgenden Schritte:
i) Vorneutralisieren der Laugenlösung **durch** die Zugabe eines Neutralisierungsmittels;
ii) Oxidieren von Eisen(II)-sulfat zu Eisen(III)-sulfat **durch** Sprühen von Luft oder Sauerstoff in die aus Schritt (i) resultierende Lösung bei einer erhöhten Temperatur;
iii) Einstellen der freien Säure und des pH-Werts der aus Schritt (ii) resultierenden Lösung auf für die Hämatit-Ausscheidung geeignete Levels;
iv) Zugeben von Hämatitkeim zu der aus Schritt (iii) resultierenden Lösung und Halten der Lösung unter diesen Bedingungen für eine Verweilzeit, so dass im Wesentlichen die vollständige Konversion von Eisen(III)-sulfat zu Hämatit-Ausscheidungsprodukt erreicht wird;
v) Filtern oder Eindicken der Lösung aus Schritt (iv), um das Hämatit-Ausscheidungsprodukt zu entfernen;
vi) Wiederverwerten eines Teils des Hämatits aus Schritt (v) in Schritt (iv) als der Hämatitkeim; und
vii) Rückgewinnen von Nickel und Cobalt aus der Filtratlösung.

2. Verfahren gemäß Anspruch 1, wobei die Oxidation von Eisen(11)-sulfat zu Eisen(III)-sulfat in Schritt (ii) bei einer Temperatur innerhalb des Bereichs von etwa 60 °C bis 150 °C auftritt.

3. Verfahren gemäß Anspruch 1 oder 2, wobei die Konzentration von freier Säure unter 10 g/l liegt.

4. Verfahren gemäß einem der Ansprüche 1 bis 3, wobei der pH-Wert der aus Schritt (ii) resultierenden Lösung unter etwa 2,5 gehalten wird.

5. Verfahren gemäß einem der vorhergehenden Ansprüche, wobei die Lösung aus Schritt (iv) zwischen etwa 60 °C und 150 °C gehalten wird.

6. Verfahren gemäß einem der vorhergehenden Ansprüche, wobei die Keimkonzentration vorzugsweise innerhalb des Bereichs von etwa 5 g/l und 100 g/l liegt.

7. Verfahren gemäß einem der vorhergehenden Ansprüche, wobei während der Hämatit-Ausscheidung Sauerstoff in die Lösung aus Schritt (iv) gesprüht wird.

8. Verfahren gemäß einem der vorhergehenden Ansprüche, wobei das Neutralisierungsmittel eines oder mehrere von Calcret, Kalkstein oder Kalk beinhaltet.

## Revendications

1. Un procédé hydrométallurgique pour précipiter du fer sous la forme d'hématite à partir de solutions de lixiviation contenant du nickel, du cobalt et du fer, **caractérisé par** les étapes consistant à :
i) pré-neutraliser la solution de lixiviation par ajout d'un agent de neutralisation ;
ii) oxyder du sulfate ferreux en sulfate ferrique par injection d'air ou d'oxygène dans la solution résultant de l'étape (i) à une température élevée ;
iii) ajuster l'acide libre et le pH de la solution résultant de l'étape (ii) à des niveaux adéquats pour la précipitation d'hématite ;
iv) ajouter à la solution résultant de l'étape (iii) une amorce d'hématite et maintenir la solution dans ces conditions pendant un temps de séjour de telle sorte qu'il soit obtenu une conversion substantiellement complète du sulfate ferrique en précipité d'hématite ;
v) filtrer ou concentrer la solution issue de l'étape (iv) afin de retirer le précipité d'hématite ;
vi) recycler une portion de l'hématite de l'étape (v) à l'étape (iv) comme amorce d'hématite ; et
vii) récupérer le nickel et le cobalt de la solution de filtrat.

2. Un procédé selon la revendication 1, dans lequel l'oxydation du sulfate ferreux en sulfate ferrique de l'étape (ii) se produit à une température comprise dans la gamme allant d'environ 60 °C à 150 °C.

3. Un procédé selon la revendication 1 ou la revendication 2, dans lequel la concentration d'acide libre est en dessous de 10 g / L.

4. Un procédé selon l'une quelconque des revendications 1 à 3, dans lequel le pH de la solution résultant de l'étape (ii) est maintenu en dessous de 2,5 environ.

5. Un procédé selon l'une quelconque des revendications précédentes, dans lequel la solution de l'étape (iv) est maintenue entre environ 60 °C et 150 °C.

6. Un procédé selon l'une quelconque des revendications précédentes, dans lequel la concentration de l'amorce est de préférence comprise dans la gamme allant d'environ 5g/L à 100g/L.

7. Un procédé selon l'une quelconque des revendications précédentes, dans lequel de l'oxygène est injecté dans la solution de l'étape (iv) durant la précipitation d'hématite.

8. Un procédé selon l'une quelconque des revendications précédentes, dans lequel l'agent de neutralisation comprend un élément quelconque ou plus parmi la calcrète, le calcaire et la chaux.
